# EUROPEAN PATENT APPLICATION

(11) **EP 4 697 563 A1**
(43) Date of publication of application: **18.02.2026**
(21) Application number: 25181480.2
(22) Date of filing: 06.06.2025
(51) Int. Cl.: H02K 1/16, H02K 3/34

(54) **MOTOR STATOR STRUCTURE**

(30) Priority: 15.08.2024 US 202463683248 P; 22.01.2025 CN 202510099877
(71) Applicant: Delta Electronics, Inc., Taoyuan City 333 (TW)
(72) Inventor: LIN, Hsing-Cheng, Taoyuan 333 (TW); HUANG, Kuei-Yuan, Taoyuan 333 (TW); CHIEN, Chia-Hsing, Taoyuan 333 (TW)
(74) Representative: Nederlandsch Octrooibureau

(57) **Abstract**

A motor stator structure includes a stator body and multiple insulating papers. The stator body includes multiple stacked silicon steel sheets and multiple winding slots surrounding the stator body in a circumferential direction. The plurality of insulating papers are inserted into the winding slots respectively. Each insulating paperpasses through the stator body in an axial direction, and is folded from at least one axial end toward the end surface of the stator body to form a folded piece. The folded pieces protruded from the first group of the winding slots abut against a first end surface of the stator body. The folded pieces of the insulating papers protruded from the second group of the winding slots abut against a second end surface of the stator body. The first group and the second group of the winding slots alternate with each other in the circumferential direction.

## Description

### BACKGROUND

### Field of Invention

The present disclosure relates to a motor stator structure, in particular to a motor stator structure with a stator body not glued and inserted with insulating sheets.

### Description of Related Art

Conventionally, an insulation paper used in the industry for motors is mostly U-shaped paper folded back to form folded pieces, and the folded pieces still maintain a straight line distance from the stacked silicon steel sheets. During the motor manufacturing process, the stacked silicon steel sheets often has a cracking issue to scrapping and increasing production costs due to transfer or process reasons.

### SUMMARY

The present disclosure proposes a motor stator structure for overcoming or alleviating the problems of the prior art.

In one or more embodiments, a motor stator structure includes a stator body having a plurality of stacked silicon steel sheets and having a plurality of winding slots that are arranged around the stator body in a circumferential direction and divided into a first group of winding slots and a second group of winding slots; and a plurality of insulating papers inserted into the winding slots respectively in an axial direction, wherein each insulating paperis folded back in at least one axial end toward an end surface of the stator body to form a folded piece, wherein the folded pieces of the insulating papersprotruding from the first group of winding slots abut against a first end surface of the stator body, and the folded pieces of the insulating papers protruding from the second group of winding slots abut against a second end surface of the stator body, wherein the first groups and the second groups of the winding slots are alternately arranged with each other in the circumferential direction, and wherein the first end surface and the second end surface are opposite to each other in the axial direction.

In one or more embodiments, each insulating paper has a closed-loop cross section.

In one or more embodiments, the motor stator structure further includes a plurality of conductor wires inserted into the winding slots respectively, wherein each insulating paper is located between an inner sidewall of the respective winding slot and the respective conductor wire.

In one or more embodiments, the first group of winding slots includes a plurality of odd-numbered slots, and the second group of winding slots includes a plurality of even-numbered slots.

In one or more embodiments, each silicon steel sheet has a thickness less than or equal to 0.3 mm, and no glue filling between the stacked silicon steel sheets.

In one or more embodiments, each insulating paper has the folded pieces at two axial ends in the axial direction, and the folded pieces only abut against the first end surface or the second end surface.

In one or more embodiments, the stator body has a central space and an outer diameter sidewall, and the winding slots are closer to the central space and farther from the outer diameter sidewall.

In one or more embodiments, each winding slot has a rectangular cross section, and the folded pieces are located on three sides of the rectangular cross section.

In one or more embodiments, the folded pieces are located on a side of the rectangular cross section closest to the central space and on two sides of the rectangular cross section in the circumferential direction.

In one or more embodiments, the folded pieces folded back in the circumferential direction have an oblique angle with the first end surface or the second end surface.

In sum, the improved scheme of the motor stator structure disclosed herein is a full closed-loop insulating paper design, including a slot liner with a folded piece, and the folded piece is located at an axial end of the insulating paper. The overlapping portions of the insulating papers are located in the slot near the outer diameter sidewall of the stator body. The insulating paper has the folded pieces located near the inner diameter (i.e., near the central space) of the stator body, and the insulation paper is designed in a closed-loop ring to fit an inner sidewall of the winding slot tightly. After all the insulating papers are inserted into the winding slots of the stator body, the odd-numbered slot insulating papers are pushed down against one end surface of the stator body, and the even-numbered slot insulating papers are pushed up against the other end surface of the stator body. The folded pieces of the insulating papers are arranged in the circumferential direction across the slots, and alternately clamp the two opposite end surfaces of the stator body in the axial direction, that is, the insulating papers are arranged alternately according to the odd and even number slots, and the folded pieces are configured to abut against the two end surfaces of the stator body to prevent cracking.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 illustrates a perspective view of a motor stator structure according to some embodiments of the present disclosure;
Fig. 2 illustrates a perspective view of the motor stator structure in Fig. 1 with all conductor wires removed;
Fig. 3 illustrates an enlarged perspective view of an end surface at the motor stator structure in Fig. 2;
Fig. 4 illustrates an enlarged perspective view of another end surface at the motor stator structure in Fig. 2;
Fig. 5 illustrates an enlarged perspective view of an end surface at the motor stator structure in Fig. 3;
Fig. 6 illustrates an enlarged perspective view of another end surface at the motor stator structure in Fig. 5;
Fig. 7 illustrates a cross-sectional view of a motor stator structure according to some embodiments of the present disclosure; and
Fig. 8 illustrates an enlarged top view of a motor stator structure according to some embodiments of the present disclosure.

### DETAILED DESCRIPTION

Reference will now be made in detail to the present embodiments, examples of which are illustrated in the accompanying drawings. Wherever possible, the same reference numbers are used in the drawings and the description to refer to the same or like parts.

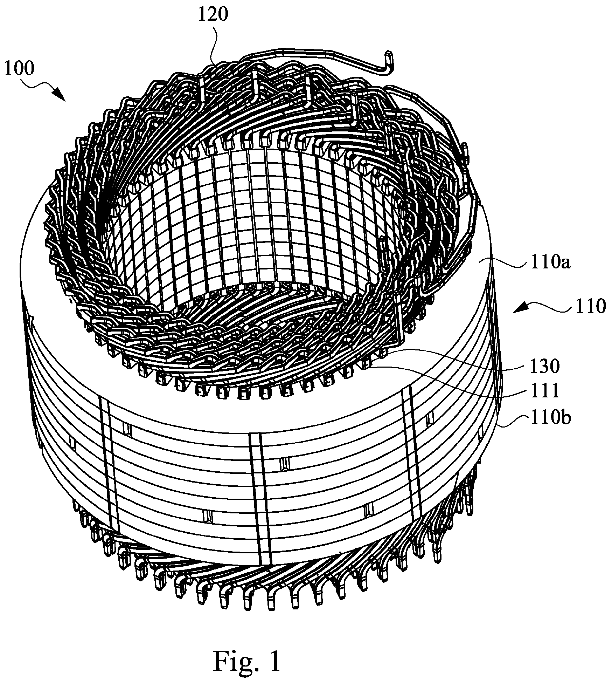

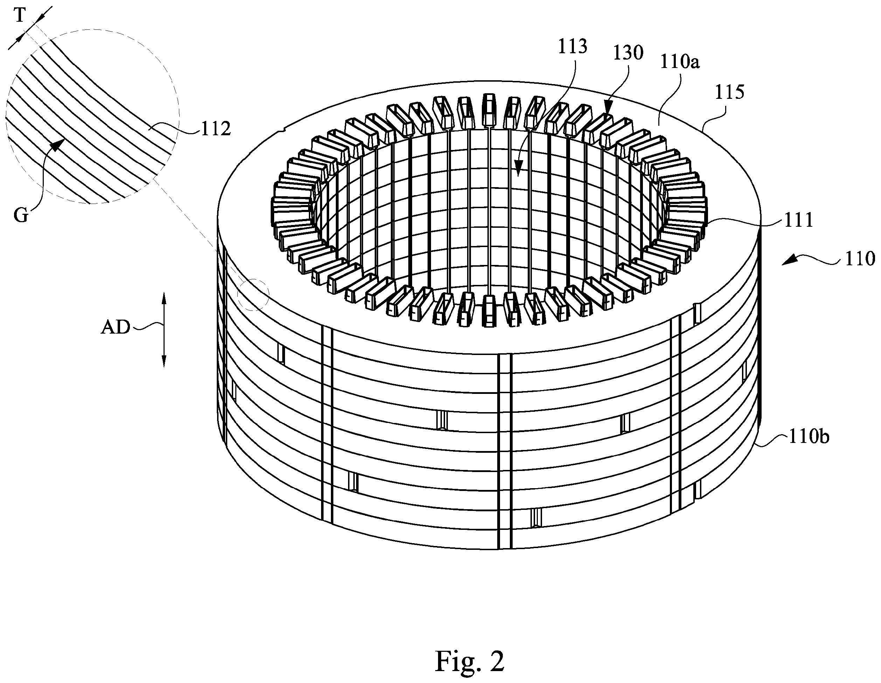

Referring to Figs. 1 and 2, a motor stator structure 100 includes a stator body 110 and a plurality of insulating papers 130. The stator body 110 has two end surfaces (110a, 110b) opposite to each other in an axial direction AD. The stator body 110 is formed by stacking a plurality of silicon steel sheets 112 and has a plurality of winding slots 111 formed in the stator body 110 in the axial direction AD. The winding slots 111 are further arranged in a circumferential direction to surround the stator body 110. In some embodiments of the present disclosure, the winding slots 111 are arranged at equal intervals in the circumferential direction around the stator body 110. The insulating papers 130 are inserted into the winding slots 111 respectively in the axial direction AD, and each insulating paper130 passes through the stator body 110 in the axial direction AD, i.e., the insulating paper 130 is inserted into the winding slots 111 in the axial direction AD and at least a portion of the protrusion is not in contact with the two end surfaces (110a, 110b). In some embodiments of the present disclosure, a thickness T of each silicon steel sheet 112 is less than or equal to 0.3 mm. The silicon steel sheets 112 are stacked in the axial direction AD and a gap G is maintained therebetween without glue filled (i.e., the gap G between the silicon steel sheets 112 is not filled with glue for bonding). In some embodiments of the present disclosure, the stator body 110 has a central space 113 and an outer diameter sidewall 115, and the winding slots 111 are closer to the central space 113 and farther from the outer diameter sidewall 115 in a radial direction.

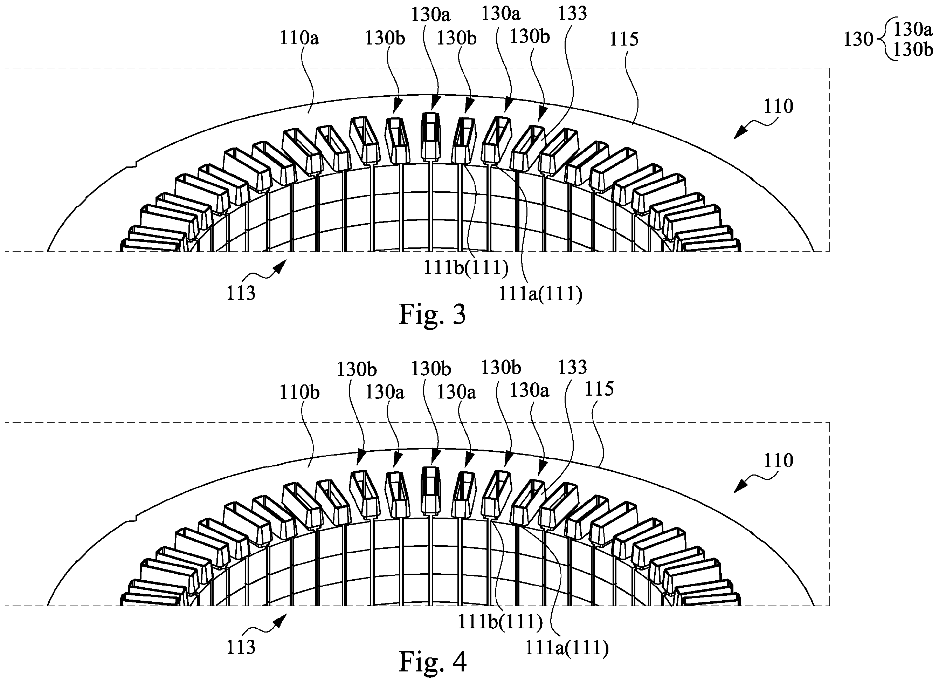

Referring to Figs. 3 and 4, in some embodiments of the present disclosure, at least one axial end of each insulating paper 130 is folded back toward the end surface of the stator body 110 to form a folded piece 133. Specifically, the folded piece 133 of each insulating paper 130b in a first group 111b of the winding slots 111 abuts against an end surface 110a of the stator body 110, and the folded piece 133 of each insulating paper 130a in the second group 111a of the winding slots 111 abuts against the other end surface 110b of the stator body 110. The first group 111b and the second group 111a of the winding slots 111 are alternated with each other. For example, the end surface 110b is located at an upper side in FIG. 2, the end surface 110a is at located a lower side in FIG. 2, that is, the end surface 110a and the end surface 110b are opposite to each other in the axial direction AD. In some embodiments of the present disclosure, the first group 111b of the winding slots 111 includes a plurality of odd-numbered slots, and the second group 111a of the winding slots 111 includes a plurality of even-numbered slots. Because the folded piece 133 abuts against the two end surfaces (110a, 110b) of the stator body 110, the folded piece 133 can be pushed toward the stacked silicon steel sheets from both ends of the axial direction AD, and because the odd and even number slots are alternated, balanced and spaced to enable the thrusts at both ends of the axial direction AD roughly equal, and the stacked silicon steel sheets 112 are pressed against each other to prevent the sheets from cracking. Although each insulating paper130 in the drawings has the folded piece 133 at both axial ends, each insulating paper130 may also have the folded piece 133 at only one axial end such that the folded piece 133 abuts against the respective end surface (110a or 110b) to prevent the sheets from cracking.

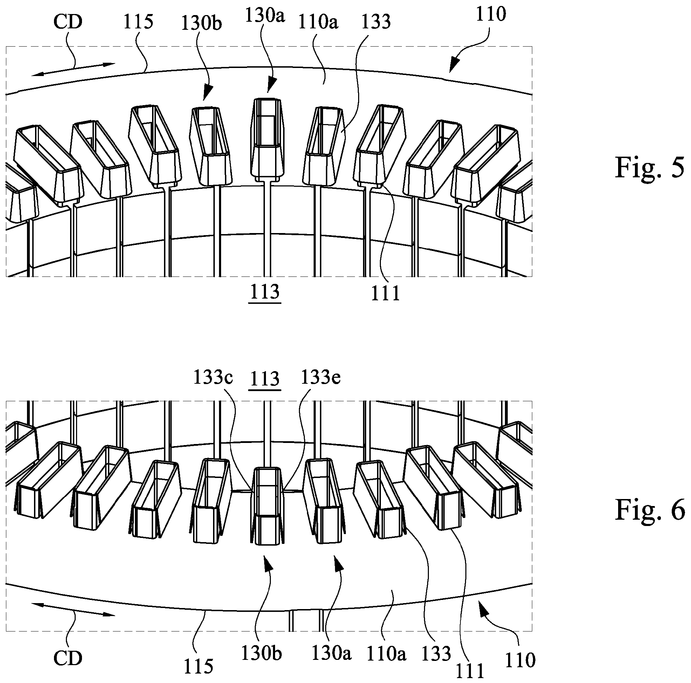

Referring to Figs. 5 and 6, in some embodiments of the present disclosure, the winding slots 111 are closer to the central space 113 of the stator body 110 and farther from the outer diameter sidewall 115 of the stator body 110. In some embodiments of the present disclosure, the folded pieces 133 are located at three sides of the winding slot 111, and one of the three sides of the winding slot 111 is the side closest to the central space 113. In some embodiments of the present disclosure (referring to Fig. 6), the folded piece 133 is located on three sides of the winding slot 111 excluding the side of the winding slot 111 closest to the outer diameter sidewall 115. In some embodiments of the present disclosure, each insulating paper (130a, 130b) and its folded piece 133 have an umbrella-shaped or mushroom-shaped appearance, wherein two sides (133c, 133e) along the circumferential direction CD have an oblique angle (i.e., not a right angle) with the the above-mentioned design of the folded piece 133 is to be folded back to the inner diameter (i.e., closer to the central space 113 of the stator body 110) to insure that the folded piece 133 can be prevented from turning outward beyond the inner diameter and interfering with the rotor in a general outer stator and inner rotor motor structure. Of course, the design of the folded piece 133 proposed in the present disclosure can also be applied to the In some embodiments of the present disclosure, each insulating paper (130a or 130b) may include a plurality of overlapping insulating papers, and the overlapping portions of the papers is located in the stator slot near the outer diameter sidewall 115 of the stator body 110, thereby preventing the stacked silicon steel sheets of the stator body from cracking.

Referring to Figs. 5 and 6, in some embodiments of the present disclosure, the winding slots 111 are closer to the central space 113 of the stator body 110 and farther from the outer diameter sidewall 115 of the stator body 110. In some embodiments of the present disclosure, the folded pieces 133 are located at three sides of the winding slot 111, and one of the three sides of the winding slot 111 is the side closest to the central space 113. In some embodiments of the present disclosure (referring to Fig. 6), the folded piece 133 is located on three sides of the winding slot 111 excluding the side of the winding slot 111 closest to the outer diameter sidewall 115. In some embodiments of the present disclosure, each insulating paper (130a, 130b) and its folded piece 133 have an umbrella-shaped or mushroom-shaped appearance, wherein sides (133c, 133e) of the the folded piece 133 folded back in the circumferential direction CD have an oblique angle (ie, not a right angle) with the end surface, e.g., 110a or 110b. The above-mentioned design of the folded piece 133 is to be folded back close to the inner diameter (i.e., closer to the central space 113 of the stator body 110) in order to prevent the folded piece 133 from turning outward beyond the inner diameter and interfering with the rotor in a general outer-stator-inner-rotor motor structure. Of course, the design of the folded piece 133 proposed in the present disclosure can also be applied to an inner-stator-outer-rotor motor structure to prevent the stacked silicon steel sheets from cracking. In some embodiments of the present disclosure, each insulating paper (130a or 130b) may include a plurality of overlapping insulating papers, and the overlapping portions of the insulating paper are located at the winding slot near the outer diameter sidewall 115 of the stator body 110.

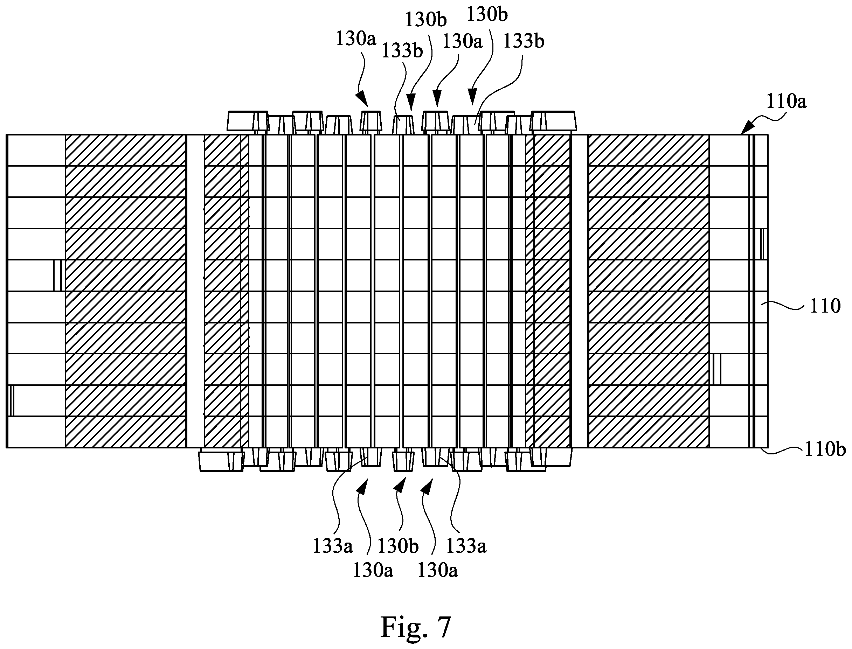

Please refer to Fig. 7, which illustrates a positional relationship between the insulating papers (130a, 130b) and the stator body 110. After at least one axial end of the insulating paper (130a, 130b) is folded back to form a folded piece (133a, 133b), all the insulating papers (130a, 130b) are inserted through an opening of the winding slots 111 respectively and protruded from the other openings of the winding slots 111 such that the two axial ends of all the insulating papers (130a, 130b) protrude from the two end surfaces (110a, 110b) of the stator body 110 respectively. Then, the folded piece 133b of the insulating paper130b is pushed toward the end surface 110a of the stator body 110 in the axial direction AD until the folded piece 133b abuts against the end surface 110a, and the folded piece 133a of the insulating paper 130a is pushed toward the end surface 110b of the stator body 110 in an opposite axial direction AD until the folded piece 133a abuts against the end surface 110b. In some embodiments of the present disclosure, the insulating papers 130b are inserted into the odd-numbered slots of the winding slots, and the insulating papers 130a are inserted into the even-numbered slots of the winding slots, but not being limited thereto. The structure of the winding slot 111 is described in detail in the following description.

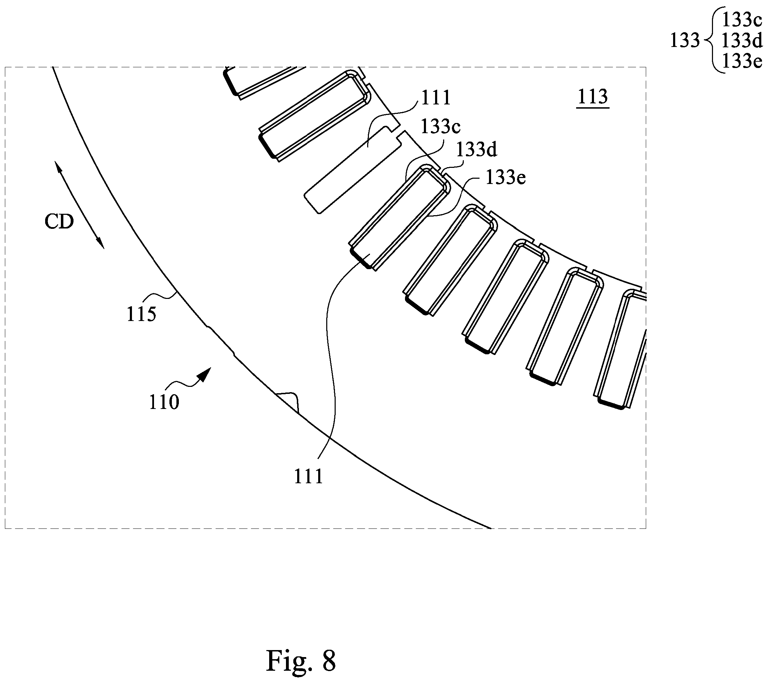

Referring to Fig. 8, in some embodiments of the present disclosure, each winding slot 111 has a substantially rectangular cross-section. The three sides (133c, 133d, 133e) of the folded piece 133 are located at the three sides of the rectangle of the winding slot 111. In some embodiments of the present disclosure, the three sides (133c, 133d, 133e) of the folded piece 133 are located at sides of the rectangular winding slot 111 closer to the central space 113, and the side of the rectangular winding slot 111 closest to the outer diameter sidewall 115 is not included. In some embodiments of the present disclosure, after a plurality of conductor wires 120 are inserted into the winding slots 111 respectively, each insulating paper130 is located between an inner sidewall of the respective winding slot 111 and the respective conductor wire 120 (also referring to Fig. 1). In some embodiments of the present disclosure, each insulating paper has a closed-loop or closed-annular cross section when viewed along the axial direction AD. In some embodiments of the present disclosure, multiple insulating papers may be overlapped to form the closed-loop cross section. In some embodiments of the present disclosure, all winding slots 111 are designed with equal slot widths, and are matched with conductor wires 120 in the form of flat wires, hairpin wires, etc., or can be applied to the distributed windings, this type of product is mostly designed with unequal slot width arcs.

Thus, the improved scheme of the motor stator structure disclosed herein is a full closed-loop insulating paper design, including a slot liner with a folded piece, and the folded piece is located at an axial end of the insulating paper. The overlapping portions of the insulating papers are located in the slot near the outer diameter sidewall of the stator body. The insulating paperhas the folded pieces located near the inner diameter (i.e., near the central space) of the stator body, and the insulation paper is designed in a closed-loop ring to fit an inner sidewall of the winding slot tightly. After all the insulating papers are inserted into the winding slots of the stator body, the odd-numbered slot insulating papers are pushed down against one end surface of the stator body, and the even-numbered slot insulating papers are pushed up against the other end surface of the stator body. The folded pieces of the insulating papers are arranged in the circumferential direction across the slots, and alternately clamp the two opposite end surfaces of the stator body in the axial direction, that is, the insulating papers are arranged alternately according to the odd and even number slots, and the folded pieces are configured to abut against the two end surfaces of the stator body to prevent cracking.

## Claims

1. A motor stator structure (100) comprising:
a stator body (110) comprising a plurality of stacked silicon steel sheets (112) and having a plurality of winding slots (111) that are arranged around the stator body (110) in a circumferential direction (CD), and divided into a first group (111b) of winding slots (111) and a second group (111a) of winding slots (111); and
a plurality of insulating papers (130) inserted into the winding slots (111) respectively in an axial direction (AD), wherein each insulating paper (130) is folded back in at least one axial end toward an end surface of the stator body (110) to form a folded piece (133),
wherein the folded pieces (133b) of the insulating papers (130b) protruding from the first group (111b) of winding slots (111) abut against a first end surface (110a) of the stator body (110), and the folded pieces (133a) of the insulating papers (130a) protruding from the second group (111a) of winding slots (111) abut against a second end surface (110b) of the stator body (110),
wherein the first group (111b) and the second group (111a) of the winding slots (111) are alternately arranged with each other in the circumferential direction (CD), and
wherein the first end surface (110a) and the second end surface (110b) are opposite to each other in the axial direction (AD).

2. The motor stator structure (100) of claim 1, wherein each insulating paper (130) has a closed loop cross section.

3. The motor stator structure (100) of claim 1, further comprising a plurality of conductor wires (120) inserted into the winding slots (111) respectively, wherein each insulating paper (130) is located between an inner sidewall of the respective winding slot (111) and the respective conductor wire (120).

4. The motor stator structure (100) of claim 1, wherein the first group (111b) of winding slots (111) includes a plurality of odd-numbered slots, and the second group (111a) of winding slots (111) includes a plurality of even-numbered slots.

5. The motor stator structure (100) of claim 1, wherein each silicon steel sheet has a thickness (T) less than or equal to 0.3 mm, and the stacked silicon steel sheets (112) have gaps (G) therebetween without glue filled.

6. The motor stator structure (100) of claim 1, wherein each insulating paper (130) has the folded piece (133) at two axial ends in the axial direction (AD), and the folded piece (133) only abuts against the first end surface (110a) or the second end surface (110b).

7. The motor stator structure (100) of claim 1, wherein the stator body (110) has a central space (113) and an outer diameter sidewall (115), and the winding slots (111) are closer to the central space (113) and farther from the outer diameter sidewall (115).

8. The motor stator structure (100) of claim 7, wherein each winding slot (111) has a rectangular cross section, and the folded pieces (133/ 133c/133d/133e) are located on three sides of the rectangular cross section.

9. The motor stator structure (100) of claim 8, wherein the folded pieces (133/ 133c/133d/133e) are located on a side of the rectangular cross section closest to the central space (113) and on two sides of the rectangular cross section in the circumferential direction (CD).

10. The motor stator structure (100) of claim 9, wherein the folded pieces (133/ 133c/133e) folded back in the circumferential direction (CD) have an oblique angle with the first end surface (110a) or the second end surface (110b).
